# DEMANDE DE BREVET EUROPEEN

(11) **EP 0 581 711 A1**
(43) Date de publication de la demande: **02.02.1994**
(21) Numéro de dépôt: 93460024.8
(22) Date de dépôt: 29.07.1993
(51) Int. Cl.: A22B 5/00, A22B 7/00

(54) **Equipement pour chaîne d'abattoir**

(30) Priorité: 31.07.1992 FR 9209682
(71) Demandeur: Thomas, Hervé, F-56920 Saint-Gonnery (FR)
(72) Inventeur: Thomas, Hervé, F-56920 Saint-Gonnery (FR)
(74) Mandataire: Fournier, Michel Robert Marie

(57) **Abrégé**

Il s'agit d'un dispositif destiné à la récupération des abats au poste d'éviscération (P) sur une chaîne dite d'habillage.

Selon l'invention, le dispositif comprend un réceptacle en forme de godet (6) apte à se déplacer selon une boucle fermée le long de laquelle sont prévus un poste de réception des abats, un poste d'inspection vétérinaire et un poste de nettoyage.

Ce dispositif offre notamment l'intérêt d'être bien adapté pour satisfaire les conditions d'hygiène.

## Description

La présente invention concerne un équipement de la chaîne dite d'habillage dans un abattoir, destiné à la récupération des abats au poste d'éviscération, s'agissant plus particulièrement des abats blancs correspondant à la masse abdominale.

Le long de la chaîne d'habillage, les carcasses sont transportées écartées les unes des autres, suspendues à un rail. Elles passent devant les différents postes qui sont avantageusement équipés de plates- formes élévatrices permettant aux opérateurs de choisir la bonne position de travail en fonction des espèces telles que bovins, porcs ou ovins dont les tailles varient de façon sensible.

Ainsi en est-il du poste d'éviscération où sont associés à la plate-forme élévatrice des moyens pour recevoir les abats, et pour les transférer vers un poste d'inspection vétérinaire, puis de là vers un poste dénommé "coche" où ils sont traités, ou bien vers un bac à saisies quand ils ont été jugés impropres à la consommation.

Il va sans dire que les installations doivent être conçues de manière à répondre en fonctionnement à des conditions d'hygiène sévères. Notamment, il faut éviter absolument tout contact direct ou indirect entre carcasses, ce qui veut dire qu'en cas de risque de contact des carcasses sur des points de la chaîne, ces points doivent être nettoyés entre chaque passage. Concernant le poste d'éviscération en particulier, les moyens de réception et de transfert des abats doivent être nettoyés impérativement entre chaque bête. Le respect de ces conditions soulève d'importants problèmes pratiques.

A l'heure actuelle, il est connu d'utiliser au poste d'éviscération un système de goulotte pour recevoir et transférer les abats blancs : la plate-forme élévatrice est échancrée à l'avant en son milieu, l'échancrure se trouvant au-dessus de l'entrée de la goulotte qui descend vers l'arrière. Les masses abdominales y glissent par gravité pour arriver sur une table d'inspection vétérinaire, laquelle consiste généralement en un convoyeur parallèle à la chaîne et synchronisé avec l'avance des carcasses.

Pour le nettoyage, la goulotte est aspergée par un système à jets mobile. Mais il faut à cet effet inverser la pente de la goulotte pour évacuer les liquides de désinfection et de rinçage qui, autrement, arriveraient sur la table d'inspection. Ceci oblige à prévoir un dispositif complexe, qu'il faut de plus compléter par un système de nettoyage indépendant pour la table d'inspection.

La présente invention a pour objet un nouveau dispositif de réception et de transfert des abats au poste d'éviscération, conçu dans une optique de simplicité, d'efficacité, et de facilité d'emploi et d'adaptation aux cadences requises.

Ce nouveau dispositif est caractérisé en ce qu'il comprend un réceptacle en forme de godet apte à se déplacer selon une boucle fermée le long de laquelle sont prévus un poste de réception des abats, un poste d'inspection vétérinaire et un poste de nettoyage.

En pratique, le réceptacle tourne à distance autour d'un axe vertical. De préférence, il est prévu un poste supplémentaire en aval du poste d'inspection pour le transfert des abats au coche ou dans le bac à saisies qui, lui aussi, peut faire l'objet d'un second poste supplémentaire. Toutefois, dans la forme la plus simple, les abats peuvent être acheminés vers le coche ou vers le bac à saisies directement à partir du poste d'inspection.

Selon une autre caractéristique de l'invention, le réceptacle en forme de godet a une aptitude de basculement pour déverser automatiquement les abats.

D'autre part, il a de préférence une aptitude de déplacement en positionnement vertical, par laquelle on peut notamment régler sa hauteur en fonction de la hauteur de la plate-forme élévatrice et/ou de l'espèce traitée.

L'invention sera mieux comprise à l'aide des explications qui vont suivre et des dessins annexés, dans lequels :
la Fig. 1 est une vue schématique de côté d'un poste d'éviscération doté d'un dispositif de réception et de transfert d'abats conforme à l'invention,
la Fig. 2 est une vue agrandie d'un seul dispositif de réception et de transfert d'abats semblable à celui de la Fig. 1, et
la Fig. 3 est une vue schématique de dessus illustrant la répartition des différents postes dans ces dispositifs.

Dans ces dessins, les mêmes signes de référence désignent partout les mêmes éléments.

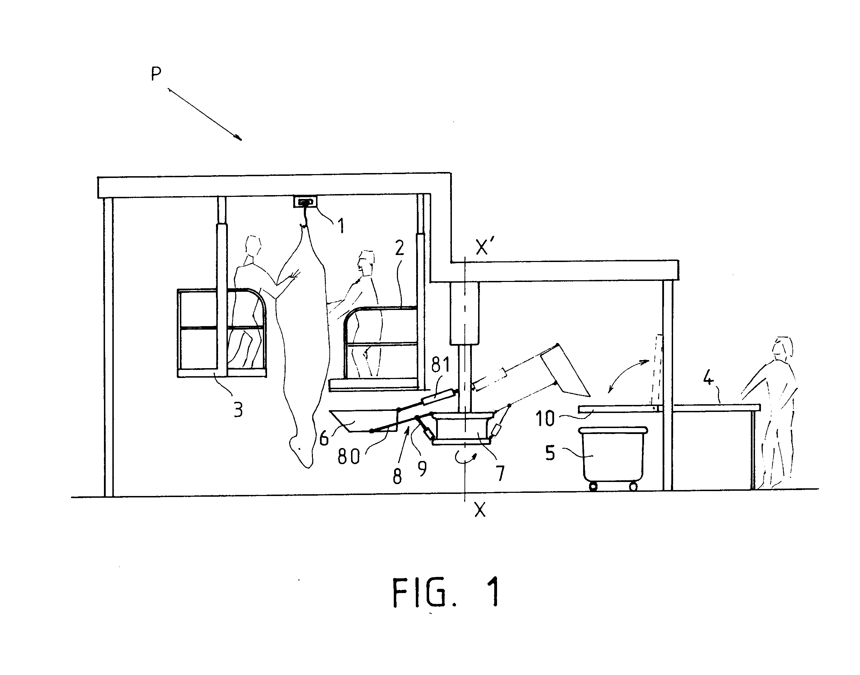

Au poste P d'une chaîne d'habillage, illustré à la Fig. 1, a lieu notamment l'éviscération, pratiquée par un opérateur évoluant sur une plate-forme élévatrice suspendue 2 tandis que les carcasses sont transportées classiquement suspendues à un rail 1. De l'autre côté de la plate-forme 2 par rapport au rail 1, peut être prévue une seconde plate-forme 3, pour permettre une autre opération au poste P telle que parage ou fente. A noter alors qu'un seul écarteur de pattes est nécessaire pour la fente et l'éviscération, au lieu de deux quand elles sont effectuées à des postes différents.

La carcasse représentée est celle d'un bovin, donc de grande taille. Pour des espèces plus petites telles que porcs ou ovins, les opérateurs ajustent leur position de travail en faisant monter leur plate-forme.

A partir de la plate-forme 2, les abats sont transférés à un poste d'inspection vétérinaire, puis selon le résultat de l'inspection, soit vers le coche 4 où ils sont traités, soit vers un bac à saisies 5. Ce sont les moyens mis en oeuvre à cet effet qui constituent précisément l'invention.

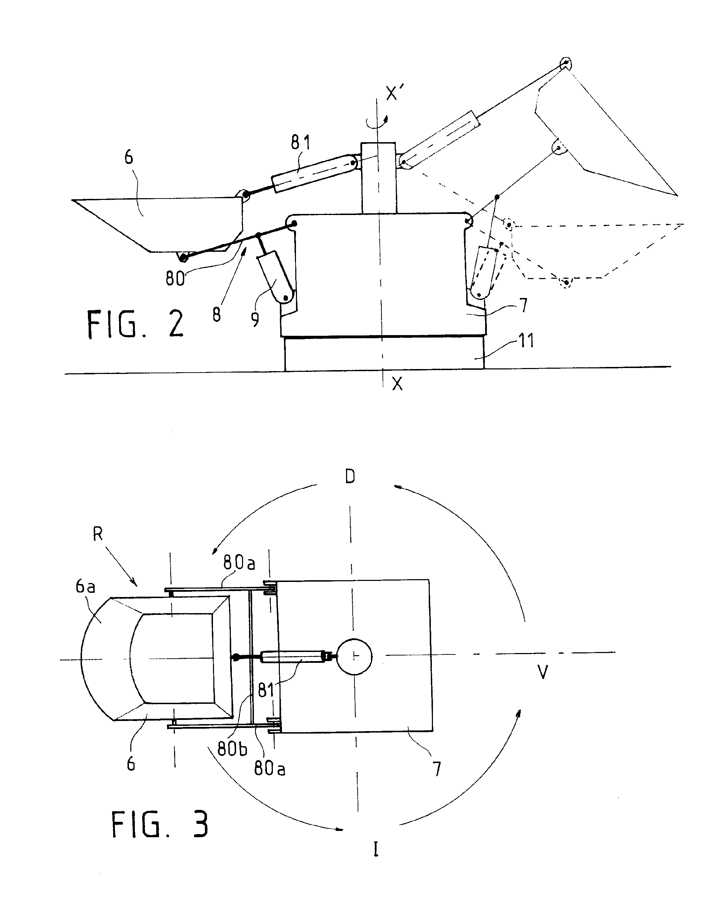

Comme on peut le voir, ils comprennent un réceptacle ou godet 6, monté rotatif à distance autour d'un arbre vertical X-X' situé derrière la plate-forme 2, de manière à pouvoir passer sous celle-ci. Pour la réception des abats, le godet 6 est immobilisé sous une échancrure médiane ménagée à l'avant de la plate-forme 2, dans la position R de la Fig. 2. Une fois chargé, le godet 6 effectue un déplacement angulaire par lequel il est dégagé de sous la plate-forme et amené à un poste d'inspection vétérinaire 1. Un nouveau déplacement angulaire l'amène à un poste de vidage V, après quoi il traverse une installation de désinfection- rinçage en D. De là, il peut rejoindre le poste R pour un nouveau cycle. Anoterqu'il est possible de doubler le godet 6 d'un second godet identique écarté angulairement de 180° pour augmenter la cadence de travail.

Le godet 6 est monté sur un support 7 tournant sur lui-même autour de l'axe X-X'. A la Fig. 2, le support 7 est rotatif sur un bâti 11 fixé au sol, tandis qu'à la Fig. 1, il est suspendu de manière à n'avoir aucune emprise au sol.

Dans les deux cas, le godet 6 est relié au support 7 par une liaison en parallélogramme déformable 8 de manière à être déplaçable verticalement tout en restant en position horizontale. La liaison 8 comprend un bras inférieur 80 constitué de deux tiges 80a articulées à la base du godet 6, de chaque côté, et solidarisées par une entretoise 80b, Fig. 3, tandis que le bras supérieur est constitué par un vérin 81 articulé au bord supérieur du godet 6, de préférence en son milieu. Le parallélogramme est formé quand la tige du vérin 81 est rentrée, le godet 6 étant alors dans une position horizontale, telle que représentée en traits normaux dans la partie de gauche des Figs. 1 et 2. La déformation de la liaison en parallélogramme 8 est commandée par un vérin 9, articulé d'une part à la base du support 7, et d'autre part au bras 80, en un point intermédiaire entre ses deux extrémités, soit en pratique au milieu de l'entretoise 80b.

Une autre caractéristique de la liaison en parallélogramme 8 est la hauteur des points d'articulation des bras 80 et 81 au support 7. Cette hauteurestchoi- sie de telle manière que pour les petits animaux, la hauteur d'utilisation du godet 6 corresponde à une position horizontale des bras 80 et 81. Par cet artifice, le godet 6, en montant à partir de la position représentée à la Fig. 1, se rapproche par rapport au plan vertical du rail 1, et reste donc à proximité immédiate de bêtes plus petites et donc moins larges que le bovin représenté à la Fig. 1.

Par l'intermédiaire du vérin 81 de la liaison en parallélogramme 8, le godet 6 a en outre une aptitude de basculement pour son vidage, comme représenté en traits fins aux Figs. 1 et 2.

Pendant un cycle de fonctionnement, le godet 6 évolue comme suit. Tout d'abord, sa position en hauteur au poste R est réglée en fonction de la hauteur de la plate-forme 2. Ce réglage en hauteur peut par exemple résulter d'un asservissement au dispositif de montée-descente de la plate-forme 2.

Du poste R, le godet 6 effectue un déplacement angulaire jusqu'au poste d'inspection I, combiné le cas échéant avec un déplacement vertical par l'action du vérin 9 (position représentée en traits tirets à la Fig. 2).

Ensuite, le vérin 9 se déploie pour faire remonter le godet 6 qui avance jusqu'au poste de vidage V. A la Fig. 1, le poste de vidage V est unique, que les abats soient destinés à être récupérés dans le bac à saisie 5 ou à être transférés au coche 4. Dans ce second cas, les abats tombent sur un plan de réception 10 se trouvant au-dessus du bac 5, et qui est escamoté dans le premier cas. En variante, le poste de vidage est dédoublé en deux postes consécutifs correspondant respectivement au bac à saisie 5 et au coche 4. Pour le vidage, le vérin 81 est déployé de manière à basculer le godet 6.

Une fois vidé, le godet 6 basculé et en position haute rentre dans un poste de lavage en D. Il s'agit d'une installation classique comportant par exemple un bac inférieur contenant une solution désinfectante, surmonté d'un système à jets, et qui est fermée par des rideaux en lames souples. De préférence, lorsque le godet 6 est rentré dans l'installation de lavage, il est abaissé, toujours en position basculée, de manière à faire plonger dans le bac la partie avant 6a du godet qui a pu être en contact avec les carcasses. Pour l'opération de rinçage, le godet est remonté. Il quitte alors le poste D. Pendant le mouvement angulaire de D en R, le vérin 81 est rétracté de sorte que le godet 6 retrouve sa position horizontale, et le vérin 9 entre en action pour le faire s'engager à la bonne hauteur sous la plate-forme 2. Bien entendu, les mouvements du godet 6 sont programmés et commandés par un automate, et en cas de dédoublement du poste de vidage, l'alternative retenue de vider les abats dans le bac à saisie 5 ou à destination du coche 4 est sélectée par une commande au poste d'inspection 1.

Outre qu'il est parfaitement adapté pour satisfaire les conditions d'hygiène, en même temps qu'efficace et pratique d'utilisation, le dispositif selon l'invention offre l'intérêt de n'occuper l'espace sous la plate-forme au poste d'éviscération que le temps de l'éviscération proprement dite. Dès que les abats sont tombés dans le godet 6, celui-ci quitte le poste R, et jusqu'à la fin du cycle, la plate-forme 2 récupère donc toute sa latitude de déplacement vertical, ce qui permet à l'opérateur d'effectuer d'autres tâches sans limitation autre que la durée.

## Revendications

1) Equipement pour chaîne dite d'habillage dans un abattoir, consistant en un dispositif destiné à la récupération des abats au poste d'éviscération (P), caractérisé en ce que ce dispositif comprend un réceptacle en forme de godet (6) apte à se déplacer selon une boucle fermée le long de laquelle sont prévus un poste (R) de réception des abats, un poste (I) d'inspection vétérinaire et un poste (D) de nettoyage.

2) Equipement selon la revendication 1, caractérisé en ce que ledit dispositif comporte en outre au moins un poste (V) de vidage du godet (6), en aval du poste (I) d'inspection vétérinaire sur ladite boucle fermée.

3) Equipement selon la revendication 1 ou 2, caractérisé en ce que le godet (6) est monté à distance sur un support (7) rotatif autour d'un axe vertical (X-X').

4) Equipement selon la revendication 3, caractérisé en ce que le support (7) est rotatif sur un bâti (11) fixé au sol.

5) Equipement selon la revendication 3, caractérisé en ce que le support (7) est de type suspendu.

6) Equipement selon l'une des revendications 3 à 5, caractérisé en ce que le godet (6) est relié au support (7) par une liaison en parallélogramme (8) permettant de faire varier sa hauteur en le maintenant en position horizontale.

7) Equipement selon la revendication 6, caractérisé en ce que le bras supérieur (81) de la liaison en parallélogramme (8) est un vérin à l'état rétracté, qui en se déployant fait basculer le godet (6) pour le vidage.

8) Equipement selon la revendication 6 ou 7, caractérisé en ce que le bras inférieur (80) de la liaison en parallélogramme (8) comprend deux tiges (80a) articulées de chaque côté à la base du godet (6) et solidarisées par une entretoise (80b), et en ce que la déformation de la liaison (8) est assurée par un vérin (9) monté entre le support (7) et l'entretoise (80b).

9) Equipement selon l'une des revendications 1 à 8, caractérisé en ce qu'au poste (D) de nettoyage, une installation de lavage comprend un bac inférieur contenant une solution désinfectante, surmonté d'un système à jets, laquelle installation est fermée par des rideaux en lames souples.

10) Equipement selon l'une des revendications 3 à 8, caractérisé en ce que le godet (6) est doublé d'un autre godet identique écarté angulairement de 180° pour augmenter la cadence de travail.
